# EUROPÄISCHE PATENTANMELDUNG

(11) **EP 1 128 688 A2**
(43) Veröffentlichungstag der Anmeldung: **29.08.2001**
(21) Anmeldenummer: 01250007.0
(22) Anmeldetag: 08.01.2001
(51) Int. Cl.: H04Q 7/22

(54) **Personenbezogenes Kommunikations- und Informationsverfahren**

(30) Priorität: 24.02.2000 DE 10009836
(71) Anmelder: MANNESMANN Aktiengesellschaft, 40213 Düsseldorf (DE)
(72) Erfinder: Schröter, Andreas, Dipl.-Ing., 40670 Meerbusch (DE)
(74) Vertreter: Meissner, Peter E., Dipl.-Ing.

(57) **Zusammenfassung**

Eine personenbezogene und dabei trotzdem an die Umgebung einer Person anpaßbare Verwendung von über ein Mobilfunknetz übertragenen Informationen wird effizient und zuverlässig ermöglicht durch ein Verfahren zum Übertragen von an einen Nutzer auszugebenden oder durch einen Nutzer eingegebenen Informationen, insbesondere Verkehrsinformationen oder Anfragen nach Verkehrsinformationen, über ein Mobilfunknetz (N),
wobei die Informationen zwischen dem Mobilfunknetz (N) und einem Zusatzgerät (A) des Nutzers zumindest zweistufig übertragen werden über einen Mobilfunkkanal zwischen dem Mobilfunknetz (N) und dem Mobilfunkendgerät (P) und drahtlos zwischen dem Mobilfunkendgerät (P) und dem Zusatzendgerät (A),
wobei die Eingabe und/oder Ausgabe der Informationen am Zusatzendgerät erfolgt.

## Beschreibung

Die Erfindung betrifft ein Verfahren zum Übertragen von Informationen, insbesondere Verkehrsinformationen oder Anfragen nach Verkehrsinformationen, zwischen einer Zentrale und einem zur Eingabe und/oder Ausgabe geeigneten Endgerät eines Users.

Die Übertragung von Informationen im Uplink und Downlink über terrestrische Mobilfunksysteme (GSM) und Satelliten-Kommunikationssysteme ist bekannt. Dabei erlauben beispielsweise Mobiltelefone nach dem GSM-Standard aufgrund der Teilnehmer-ldentifikationskarte SIM im Mobiltelefon eine personenbezogene, direkte Adressierung einer Person und damit direkte Übersendung von Informationen an diese Person. Jedoch sind die Möglichkeiten von Mobilfunkendgeräten hinsichtlich der Darstellung und Eingabe beschränkt. Deshalb gibt es auf spezielle Umgebungen zugeschnittene Zusatzendgeräte, wie beispielsweise für Kraftfahrzeuge, bei welchen zusätzlich zum Personenbezug (in Form der SIM im Mobilfunkendgerät) auch ein Umgebungsbezug hergestellt wird. Derartige Zusatzendgeräte existieren als Freisprecheinrichtungen, die im Auto einbaubar sind und mit dem Mobiltelefon über einen Stecker verbunden werden. Zum Betrieb ist eine sichere Halterung des Mobiltelefons und ein zuverlässiger Kontakt zur Freisprecheinrichtung erforderlich, was aufgrund der Vielzahl von Mobiltelefonen schwierig ist. So weisen die meisten Mobiltelefone jeweils unterschiedliche externe Schnittstellen und Spannungsversorgungsanschlüsse auf. Auch ist die äußere Form der Mobiltelefone unterschiedlich.
Aufgabe der vorliegenden Erfindung ist, eine möglichst kostengünstige, effiziente und dabei zuverlässige Übertragung von Informationen zwischen einer Verkehrszentrale und einem Zusatzgerät eines bestimmten Endgerät-Nutzers mit sowohl direkter Adressierung des Nutzers als auch umgebungsabhängiger Anpassung an Kommunikations- und Bedienungsbedürfnisse des Nutzers zu ermöglichen. Die Aufgabe wird jeweils durch die Gegenstände der unabhängigen Ansprüche gelöst.

Erfindungsgemäß ist einer Person nur ein einziges Mobilfunkendgerät für die Kommunikation über ein flächendeckendes Kommunikationsnetz (beispielsweise GSM oder IRIDIUM) zugeordnet. Innerhalb eines derartigen Kommunikationsnetzes kann dieses Mobilfunkendgerät direkt von einem Kommunikationspartner (entweder ein weiteres Endgerät über eine vermittelnde Zentrale oder eine Informationen erstellende Zentrale) adressiert werden und für eine Punkt-zu-Punkt-Kommunikation (Sprache, Datenkanäle, Punkt-zu-Punkt-Kurznachrichten oder Punkt-zu-Mehrpunkt-Kommunikation, wie beispielsweise Rundspruch-Kurznachrichten SMS-CB) genutzt werden.Dabei sind Sprach- und Datenkommunikation in bekannter Weise möglich. Die Adressierung eines bestimmten Nutzers, um Informationen gezielt von einer Zentrale an diesen zu übersenden, kann beispielsweise in GSM durch als SIMs bekannte gebräuchliche Chip-Karten mit einer Identifikationsnummer für das Endgerät und/oder den Endgerätnutzer erfolgen. Die Erfindung sieht vor, das Mobilfunkendgerät mit einer zweiten Sende- und Empfangseinrichtung zur Kommunikation des Mobilfunkendgerätes mit einem Zusatzendgerät (= Ein-/Ausgabe-Endgerät) auszubilden. Somit erfolgt die Kommunikation von einer Zentrale (Mobilfunkzentrale oder Verkehrsinformationszentrale etc.) zu einem Benutzer über ein Mobilfunkgerät und von dort aus drahtlos an ein Zusatzendgerät. Die drahtlose Kommunikation zwischen dem Mobilfunkendgerät und dem weiteren Endgerät kann insbesondere per Infrarot oder Funk erfolgen. Ein Zusatzendgerät muß nicht für eine bestimmte Person individualisiert sein, da die gezielte Übertragung einer Information an einen bestimmten Nutzer durch Übersenden an das Mobilfunkendgerät erfolgt.

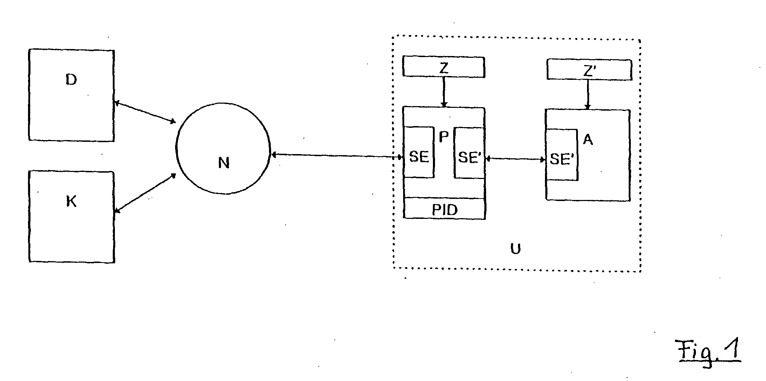

Weitere Merkmale und Vorteile der Erfindung ergeben sich aus den Ansprüchen und der nachfolgenden Beschreibung eines Ausführungsbeispiels anhand der Zeichnung. Dabei zeigt als einzige Figur
- Fig. 1: die Kommunikation mit einem Nutzer über ein Mobilfunkendgerät und ein Zusatzendgerät.
Figur 1 zeigt zwei Kommunikationsteilnehmer D und K eines Kommunikationsnetzes N, welche mit einem weiteren Teilnehmer U des Kommunikationsnetzes (letzterer mit einem Mobilfunkendgerät P und einem Zusatzgerät A) kommunizieren. Dabei werden von einer Zentrale des Kommunikationsnetzes N (beispielsweise eines Mobilfunknetzes über MSCs, BSCs, BTS etc.) zum Nutzer U Informationen übertragen, welche von den weiteren Teilnehmern D und K stammen. Ein Teilnehmer D und K kann beispielsweise auch eine Verkehrsinformationszentrale oder ein anderes computergestütztes System sein.

Wenn das personenbezogene Endgerät P in Figur 1 in die Nähe des Zusatzgerätes A kommt, wird vom Endgerät P automatisch das Zusatzgerät A aktiviert (aufgeweckt); eine drahtlose Kommunikation zwischen dem Mobilfunkendgerät P und dem Zusatzgerät A wird ermöglicht.

Erfindungsgemäß erfolgt somit die Übertragung von Informationen von einem Endgerät D zum Teilnehmer U zweistufig zunächst über eine Übertragung über das Mobilfunknetz N zum Mobilfunkendgerät P und von dort drahtlos (per Infrarot oder Funk etc.) zum Zusatzendgerät A.

Entsprechend kann die Übersendung einer Eingabe eines Nutzers in das Ein/Ausgabeendgerät A von diesem drahtlos optisch oder per Funk an das Mobilfunkendgerät P und von diesem per Mobilfunk über das Mobilfunknetz N (sowie m gegebenen Fall ein Festnetz) an die Teilnehmer D und K erfolgen.

Dadurch, daß das Mobilfunkendgerät P (per Funk, Infrarot etc.) Zusatzendgeräte A in seiner Umgebung suchen und aktiv kontaktieren kann ebenso wie das Zusatzendgerät alternativ oder zusätzlich nach Mobilfunkendgeräten in seiner Umgebung suchen und diese kontaktieren kann, ist eine Verbindung mindestens eines Mobilfunkendgerätes P mit mindestens einem Zusatzgerät A einfach und effizient automatisch möglich.

Zwischen einem Mobilfunkendgerät und einem Zusatzendgerät können neben über ein Mobilfunknetz gesendeten bzw. zu sendenden Nutzdaten auch Steuerdaten ausgetauscht werden, insbesondere Steuerdaten, durch welche das Mobilfunkendgerät die grafische oder akustische Darstellung von vom Mobilfunknetz empfangenen und an das Zusatzendgerät übertragenen Nutzdaten definiert wird.

Zusätzlich zu Nutzdaten, welche das Mobilfunkendgerät per Mobilfunk erhalten hat, kann es auch weitere von ihm anderweitig empfangene Nutzdaten an das Zusatzgerät übertragen. Dies können insbesondere Daten zur geografischen Ortsbestimmung, beispielsweise aufgrund eines Satelliten-Ortsbestimmungssystems (wie GPS) oder zur Ortsbestimmung geeigneten Parametern aus dem Mobilkommunikationsnetz (wie beispielsweise der Zellkennung) sein. Überdies können es auch weitere auf den Nutzer bezogene Daten, wie ein persönliches Telefonbuch mit Kommunikationsadressen, Präferenzen, Vorgaben für die optische und/oder akustische Darstellung etc., sein.

Auf der Erfindung basierend kann eine Vielzahl unterschiedlicher Varianten realisiert werden.

So ist es möglich, daß ein Mobiltelefon (z.B. im Auto) über eine Nahbereichs-Sende- und Empfangseinrichtung (Funk oder Infrarot) eine Verbindung zu einem Zusatzgerät in Form einer Freisprecheinrichtung aufbaut. Die Bedienung des Telefons erfolgt dann über die Bedienelemente der Freisprecheinrichtung, beispielsweise mit einer am Lenkrad angebrachten Lenkrad-Fernbedienung, mit einer Sprachsteuerung etc. Bei dieser Ausgestaltung werden die Nutzdaten in das Zusatzendgerät in Form der Freisprecheinrichtung über ein Mikrofon eingegeben und über das Mobilfunkendgerät weitergesendet. Vom Mobilfunkendgerät empfangene Nutzdaten werden hingegen über die Freisprecheinrichtung durch im Auto eingebaute Lautsprecher ausgegeben. Dabei ist eine Rauschunterdrückung, geräuschabhängige Lautstärkeanpassung usw. in der Freisprecheinrichtung möglich.

Ein Vorteil der erfindungsgemäßen Ausgestaltung liegt darin, daß im Gegensatz zu bekannten Freisprecheinrichtungen das Mobiltelefon z.B. in einem Aktenkoffer, in einer Jackentasche, in einer einfach ausgestalteten Halterung (Schaumstoffbox etc.) oder im Handschuhfach liegen kann und dort vor Beschädigung und Schockeinwirkung geschützt wird. Dabei kann das Mobiltelefon über herkömmliche Stromanschlüsse, beispielsweise über die Batterie etc., an die Bordspannung und/oder eine externe Antenne angeschlossen werden.

Wenn eine Person mit dem Mobilfunkendgerät ein Fahrzeug verläßt (in dem ein Zusatzendgerät in Form einer Freisprechanlage mit dem Mobiltelefon drahtlos kommunizierte), wird die Verbindung zwischen dem Mobilfunkendgerät und dem Zusatzendgerät unterbrochen. Dies wird vom Mobiltelefon festgestellt und die Bedienung, Nutzung, Ein- und Ausgabe erfolgt wieder (nur) direkt über das Mobiltelefon. Damit entfällt vorteilhafterweise ein bisher übliches im Auto fest angeordnetes Zweitgerät ebenso wie eine zweite Karte (twin-card) für denselben Endgerät-Nutzer.

Erfindungsgemäß können ferner Informationen, welche eine Person mit einem Mobilfunkendgerät bei einem Anbieter gebucht hat und/oder von diesem anfordert und/oder von diesem übersandt bekommt, über ein Zusatzendgerät ausgegeben werden. Hierzu ist im Fahrzeug ebenfalls ein Zusatzendgerät, umfassend zumindest eine Ausgabeeinrichtung, vorgesehen, mit welcher das (auf die Person bezogene, nämlich von der Person mitgeführte) Mobilfunkendgerät drahtlos kommunizieren kann. Dabei werden vom Informationsanbieter (D in Figur 1) Informationen an das Mobilfunkendgerät übersendet, welches diese Informationen zur Ausgabe an das Zusatzendgerät weitersendet. Die Ausgabeeinrichtung kann die Informationen akustisch (Sprachausgabe etc.) und/oder optisch (Text und/oder Grafik) darstellen. Dabei können vom Mobilfunkendgerät, wie oben ausgeführt, gewonnene geografische Positionsinformationen an die Anzeigeeinrichtung geliefert werden, die die Darstellung der Informationen durch die Ausgabeeinrichtung optimieren. Dies kann beispielsweise die Wahl eines Kartenausschnittes aus einer digitalen Karte für die grafische Anzeige von Stauinformationen in Abhängigkeit von der Position und/oder der Geschwindigkeit umfassen. Bei der Übersendung von einem Informationsanbieter (beispielsweise einer Verkehrsinformationszentrale) D über ein Mobilfunknetz an eine Vielzahl von Endgeräten (Punkt-zu-Mehrpunkt) kann eine Verschlüsselung der Informationen sinnvoll sein, um beispielsweise nur bezahlenden Nutzern die Verwertung der Informationen zu ermöglichen. Ein zur Entschlüsselung geeigneter Schlüssel Z kann mobilfunkendgerätseitig implementiert sein, insbesondere in einem Speicher im Mobilfunkendgerät und/oder in einer Mobilfunkteilnehmer-ldentifikationskarte im Mobilfunkendgerät; dies kann insbesondere ein spezieller PIN-Code sein. Alternativ kann ein Schlüssel Z' auch im Zusatzendgerät in einem Speicher oder einer darin eingeführten Karte etc. vorhanden sein. Die Entschlüsselung kann im Mobilfunkendgerät oder im Zusatzgerät erfolgen.

Das Zusatzgerät kann überdies auch zusätzliche Informationsverarbeitungsschritte ausführen, insbesondere aufgrund von ihm über das Mobilfunkendgerät übermittelten Verkehrsinformationen eine Routenplanung etc. selbst erstellen.

Ferner kann das erfindungsgemäße Verfahren für interaktive Anwendung genutzt werden. In einem Zusatzendgerät in Form eines Abfrageterminals (mit einer Tastatur und/oder Spracheingabe) kann ein Nutzer beispielsweise eine Abfrage definieren (z.B. über ein Auswahlmenü eines Informationsanbieters). Die hierbei eingegebenen Abfragedaten werden zu den in der Nähe des Zusatzendgerätes befindlichen Mobilfunkendgeräten P übertragen, wobei die Kommunikationsadresse oder eine Identifikationsadresse des Abonnenten mitgesendet werden kann. Ein Informationsanbieter D kann einen Abonnenten anhand der übermittelten Kommunikationsadresse und/oder Identifikationsdaten erkennen und ihm die beanspruchte Dienstleistung verrechnen. Ferner kann der Informationsanbieter D, basierend auf der Anfrage, eine individualisierte Antwort zusammenstellen und an das Mobilfunk-Endgerät übertragen. Die Antwort kann unterschiedlichste Informationen, wie beispielsweise Verkehrsinformationen, enthalten. Die über das Mobilfunkendgerät eingehenden Daten werden von diesem an das Zusatzendgerät übertragen und von diesem dargestellt. Derartige Zusatzendgeräte können beispielsweise tragbare Computer (wie Laptops oder Assistants), Hotelfernseher, Monitore in den Rücksitzen von Reisezügen o.ä. sein.

## Patentansprüche

1. Verfahren zum Übertragen von an einen Nutzer auszugebenden oder durch einen Nutzer eingegebenen Informationen,
insbesondere Verkehrsinformationen oder Anfragen nach Verkehrsinformationen,
über ein Mobilfunknetz (N),
wobei die Informationen zwischen dem Mobilfunknetz (N) und einem Zusatzgerät (A) des Nutzers zumindest zweistufig übertragen werden über einen Mobilfunkkanal zwischen dem Mobilfunknetz (N) und dem Mobilfunkendgerät (P) und drahtlos zwischen dem Mobilfunkendgerät (P) und dem Zusatzendgerät (A), wobei die Eingabe und/oder Ausgabe der Informationen am Zusatzendgerät erfolgt.

2. Verfahren nach Anspruch 1,
dadurch gekennzeichnet,
daß Informationen vom Zusatzendgerät über ein Mobilfunknetz zu einem Mobilfunkteilnehmer, insbesondere einer Informationszentrale, übertragen werden.

3. Verfahren nach einem der vorhergehenden Ansprüche,
dadurch gekennzeichnet,
daß die Informationen von einem Mobilfunkteilnehmer, insbesondere einer Informationszentrale, zum Zusatzendgerät übertragen werden.

4. Verfahren nach Anspruch 3,
dadurch gekennzeichnet,
daß die Übersendung von Informationen an einen bestimmten Nutzer oder eine Gruppe von bestimmten Nutzern durch Adressierung jeweils eines Mobilfunkendgerätes (P) des Nutzers erfolgt.

5. Verfahren nach einem der vorhergehenden Ansprüche,
dadurch gekennzeichnet,
daß das Mobilfunkendgerät durch eine Identitätsnummer in einer Mobilfunkteilnehmer-ldentitätskarte im Mobilfunkendgerät adressierbar ist.

6. Verfahren nach einem der vorhergehenden Ansprüche,
dadurch gekennzeichnet,
daß das Mobilfunkendgerät per Infrarot an das Zusatzgerät Informationen sendet und/oder von diesem empfängt.

7. Verfahren nach einem der vorhergehenden Ansprüche,
dadurch gekennzeichnet,
daß das Mobilfunkendgerät per Funk an das Zusatzgerät Informationen sendet und/oder von diesem empfängt.

8. Verfahren nach einem der vorhergehenden Ansprüche,
dadurch gekennzeichnet,
daß das Zusatzendgerät vom Mobilfunkendgerät automatisch aktiviert wird, wenn es in dessen per Funk und/oder per Infrarot erreichbare Nähe gelangt.

9. Verfahren nach einem der vorhergehenden Ansprüche,
dadurch gekennzeichnet,
daß dem Zusatzendgerät vom Mobilfunkendgerät drahtlos übersendete Informationen Nutzinformationen und die Ausgabe am Endgerät beeinflussende Zusatzsteuerinformationen umfassen.

10. Verfahren nach einem der vorhergehenden Ansprüche,
dadurch gekennzeichnet,
daß das Mobilfunkendgerät eine Ortsbestimmungseinrichtung, insbesondere Satelliten-Ortsbestimmungseinrichtung, insbesondere GPS, umfaßt.

11. Verfahren nach einem der vorhergehenden Ansprüche,
dadurch gekennzeichnet,
daß ein Zusatzendgerät mit mehreren Mobilfunkendgeräten gleichzeitig kommuniziert.

12. Verfahren nach einem der vorhergehenden Ansprüche,
dadurch gekennzeichnet,
daß das Zusatzendgerät eine Freisprecheinrichtung, insbesondere eine Freisprecheinrichtung für Kraftfahrzeuge umfaßt.

13. Verfahren nach einem der vorhergehenden Ansprüche,
dadurch gekennzeichnet,
daß das Zusatzendgerät eine Eingabeeinrichtung, insbesondere eine Tastatur, umfaßt.

14. Verfahren nach einem der vorhergehenden Ansprüche,
dadurch gekennzeichnet,
daß das Zusatzendgerät ein Mikrofon umfaßt.

15. Verfahren nach einem der vorhergehenden Ansprüche,
dadurch gekennzeichnet,
daß das Zusatzendgerät in einem Kraftfahrzeug eingebaut ist.

16. Verfahren nach einem der vorhergehenden Ansprüche,
dadurch gekennzeichnet,
daß das Mobilfunkendgerät von der Kraftfahrzeug-Bordspannung versorgt wird.

17. Verfahren nach einem der vorhergehenden Ansprüche,
dadurch gekennzeichnet,
daß vom Mobilfunkendgerät an das Zusatzendgerät Daten übermittelt werden, die die Art der Darstellung von per Mobilfunk an das Mobilfunkendgerät übersandten Daten im Zusatzendgerät beeinflussen.

18. Verfahren nach einem der vorhergehenden Ansprüche,
dadurch gekennzeichnet,
daß verschlüsselt per Mobilfunk beim Mobilfunkendgerät eingehende Informationen im Mobilfunkendgerät oder im Zusatzendgerät mit einem Schlüssel im Mobilfunkendgerät oder im Zusatzendgerät entschlüsselt werden.

19. Mobilfunkendgerät zur Durchführung des Verfahrens nach einem der vorhergehenden Ansprüche.

20. Mobilfunkendgerät
- mit einer Mobilfunksende- und -empfangseinrichtung,
dadurch gekennzeichnet,
daß es überdies
- eine weitere Sende- und Empfangseinrichtung zum drahtlosen Kommunizieren mit einem Zusatzendgerät aufweist.

21. Mobilfunkendgerät nach Anspruch 19 oder 20,
dadurch gekennzeichnet,
daß die Sende- und Empfangseinrichtung auf Infrarot basiert.

22. Mobilfunkendgerät nach einem der vorhergehenden Ansprüche 19 bis 21,
dadurch gekennzeichnet,
daß die Sende- und Empfangseinrichtung eine Funkeinrichtung ist.

23. Mobilfunkendgerät nach einem der vorhergehenden Ansprüche 19 bis 22,
dadurch gekennzeichnet,
daß es eine Ortsbestimmungseinrichtung, insbesondere Satelliten-Ortsbestimmungseinrichtung oder Ortsbestimmungseinrichtung zur Ortsbestimmung aufgrund von Mobilfunk-Zellkennungsdaten aufweist.

24. Zusatzendgerät zur Durchführung des Verfahrens nach einem der Ansprüche 1 bis 18.

25. Zusatzendgerät, insbesondere nach Anspruch 24,
- mit einer Sendeeinrichtung zum drahtlosen Senden von Informationen an ein Mobilfunkendgerät,
- mit einer Empfangseinrichtung zum drahtlosen Empfang von Informationen von einem Mobilfunkendgerät,
- mit einer Ausgabeeinrichtung zur optischen und/oder akustischen Eingabe empfangener Informationen,
- mit einer Steuerung zur Ansteuerung der Sendeeinrichtung, Empfangseinrichtung und Ausgabeeinrichtung.

26. Zusatzendgerät nach Anspruch 24 oder 25,
dadurch gekennzeichnet,
daß es eine Eingabeeinrichtung zur Eingabe von über ein Mobilfunknetz zu sendenden Informationen aufweist.

27. Zusatzendgerät nach einem der Ansprüche 24 bis 26,
dadurch gekennzeichnet,
daß die Sende- und Empfangseinrichtung auf Funk basieren.

28. Zusatzendgerät nach einem der Ansprüche 24 bis 27,
dadurch gekennzeichnet,
daß die Sende- und Empfangseinrichtung optische Sende- und Empfangseinrichtungen sind.

29. Zusatzendgerät nach einem der Ansprüche 24 bis 28,
dadurch gekennzeichnet,
daß es eine Freisprechanlage zum Einbau in ein Kraftfahrzeug umfaßt.

30. Zusatzendgerät nach einem der Ansprüche 24 bis 27,
dadurch gekennzeichnet,
daß es in einem öffentlichen Transportmittel oder öffentlich zugänglich anordenbar oder angeordnet ist.
